# EUROPEAN PATENT APPLICATION

(11) **EP 4 080 948 A1**
(43) Date of publication of application: **26.10.2022**
(21) Application number: 20901266.5
(22) Date of filing: 15.12.2020
(51) Int. Cl.: H04W 56/00, H04L 27/26

(54) **METHOD AND DEVICE FOR DETERMINING TIMING POSITION, APPARATUS, AND STORAGE MEDIUM**

(30) Priority: 18.12.2019 CN 201911312743
(71) Applicant: Sanechips Technology Co., Ltd., Shenzhen, Guangdong 518055 (CN)
(72) Inventor: QIU, Ning, Shenzhen, Guangdong 518055 (CN)
(74) Representative: Mozzi, Matteo
(86) International application number: PCT/CN2020/136592
(87) International publication number: WO 2021/121229

(57) **Abstract**

Provided are a method and apparatus for determining a timing position, a device, and a storage medium. The method includes that: multiple estimated values for a timing position of a terminal are acquired; and an actual timing position is determined based on the multiple estimated values and distribution features of multiple pheromone matrices. The pheromone matrices are obtained by performing training based on information of the timing position.

## Description

### Technical Field

The present disclosure relates to the technical field of communication device, and in particular to a method and apparatus for determining a timing position, a device, and a storage medium.

### Background

With the increase of a transmission rate of 5th Generation mobile networks (5G), a high-order modulation mode and a high bit rate rely on an operating environment with a high Signal-to-Noise Ratio (SNR) and a terminal channel estimation to provide a sufficient degree of accuracy. Channel estimation and frequency domain noise reduction technologies put forward a higher requirement for synchronization maintenance of a terminal system. A large timing position deviation will cause the rotation of sub-carriers on a frequency domain channel, which reduces the operating SNR of MIMO and channel estimation.

Under the high demand on 5G terminal services, the accuracy of a timing position determination principle in the related art is low in some specific scenarios.

### Summary

Embodiments of the present disclosure provide a method and apparatus for determining timing position, a device, and a storage medium.

Embodiments of the present disclosure provide a method for determining a timing position, which includes the following operations. Multiple estimated values for a timing position of a terminal are acquired. An actual timing position is determined based on the multiple estimated values and distribution features of multiple pheromone matrices. The pheromone matrices are obtained by performing training based on information of the timing position.

In a second aspect, the embodiments of the present disclosure provide an apparatus for determining a timing position, which includes an acquiring module and a determining module. The acquiring module is configured to acquire the multiple estimated values for the timing position of the terminal. The determining module is configured to determine the actual timing position based on the multiple estimated values and the distribution features of the multiple pheromone matrices. The pheromone matrices are obtained by performing training based on information of the timing position.

In a third aspect, the embodiments of the present disclosure provide a device, which includes: one or more processors; and a memory, configured to store one or more programs. When executed by the one or more processors, the one or more programs cause the one or more processors to implement any method in the embodiments of the present disclosure.

In a fourth aspect, the embodiments of the present application provide a storage medium, which may store a computer program. When executed by the processor, the computer program implements any method in the embodiments of the present disclosure.

The method and apparatus for determining a timing position, the device, and the storage medium provided by the embodiments of the present disclosure solve the problem in the related art of low accuracy of the single method for determining a timing position in some specific scenarios.

### Brief Description of the Drawings

Fig. 1 is a flowchart of a method for determining a timing position provided by an embodiment of the present disclosure.
Fig. 2 is a structural schematic diagram of an apparatus for determining a timing position provided by an embodiment of the present disclosure.
Fig. 3 is a structural schematic diagram of a device provided by an embodiment of the present disclosure.

### Detailed Description

In order to make the purpose, technical solutions and advantages of the present disclosure clearer, the embodiments of the present disclosure will be described below in combination with the drawings in detail. It is to be noted that the embodiments in the present disclosure and the characteristics in the embodiments may be combined under the condition of no conflicts.

These operations shown in the flowchart of the accompanying drawings can be executed in a computer system like a group of computer executable instructions. Moreover, although a logical sequence is shown in the flowchart, in some cases, the shown or described operations can be performed in a sequence different from that described herein.

Under the premise of higher energy efficiency, higher spectrum efficiency, lower cost and more security, the 5th generation mobile networks can provide a peak data rate on Gbps scale, an access experience with a delay of less than one millisecond, the ability to connect hundreds of billions of devices, and consistent services in scenarios of high mobility and high connection density. An Enhanced Mobile Broadband (eMBB) scenario is an enhancement of the traditional mobile broadband service. Enhancements include improving the transmission rate and reducing the transmission delay, as well as providing the consistent services for the scenarios of high mobility and high connection density.

With the increase of 5G transmission rate, a high-order modulation mode and a high bit rate need to rely on a terminal channel estimation and an operating environment with a high SNR to provide a high enough accuracy. Channel estimation and frequency domain noise reduction technologies put forward a higher requirement for synchronization maintenance of a terminal system. A large timing position deviation will cause the rotation of sub-carriers on a frequency domain channel, which reduces the operating SNR of MIMO and channel estimation.

A large number of methods for timing synchronization estimation have been proposed in the related art, which may be divided into three kinds: a training sequence based algorithm based on the Schmidl & Cox (SC) algorithm, a cyclic prefix based algorithm based on the Maximum Likelihood (ML) algorithm and a blind estimation algorithm based on the MUSIC algorithm. Although blind estimation does not need additional signaling overhead and has no impact on the data transmission rate, blind estimation is rarely adopted in commercial chips due to its non-ideal performance and high complexity.

In the above methods, after obtaining a time-domain response of the channel estimation, three types of timing positions may be obtained, namely an earliest arriving path, a maximum power path and a time-domain gravity center.

The earliest arriving path refers to selecting the first path whose power exceeds a threshold in a multi-path channel environment as the timing position. The path whose power exceeds the threshold may be either a direct path or the first reflection path.

The maximum power path refers to selecting the path with the maximum power from all arrival paths in the multi-path channel environment as the timing position.

The time-domain gravity center refers to performing weighted averaging to the paths at different positions according to the power, and taking the position of power center of gravity of multiple paths on the time axis as the timing position.

The advantage of using the earliest arriving path as the timing position is that all the multiple paths are on the right side of timing base, which enables to make full use of the length of a cyclic prefix, so as to achieve the purpose of reducing inter-symbol interference in the case of large channel delay spread. The earliest arriving path is also the most widely used way of timing position selection in the related art.

But in the typical Rayleigh-fading channel environment in the urban area, the earliest arriving path is probably not the strongest path, and in a scenario where the power of the earliest arriving path is relatively low, the timing position is prone to deviation, jitter and even error, which affects the demodulation performance under 5G high-order modulation.

Taking the maximum power path as the timing position alleviates the robustness of the environment where the earliest arriving path is weak, but the instantaneous strongest paths at different time points under a multi-path fading channel may come from the reflection paths with different time delays on the channel. Selecting the maximum power path as the timing position is easy to introduce frequent jumps of timing in a multi-path rich scenario, which has a negative impact on the way of temporal filtering of channel estimation.

The time-domain gravity center refers to performing weighted averaging to the paths at different positions according to the power, and taking the position of power center of gravity of multiple paths on the time axis as the timing position. Because the time-domain gravity center takes the power weighting of each path into account and less depends on the judgment accuracy of a single path, the time-domain gravity center is the most robust of the three timing positions and is not prone to an abnormal result. However, the time-domain gravity center uses an additional path with low SNR, and even introduces a noise path, which results in the large noise due to taking the time-domain gravity center as the timing position. In a scenario where each path of the multi-path channel fades with time, a time-domain position changes with time and is not stable.

To sum up, the three principles of determining the timing position may have the problem of accuracy in some specific scenarios. In the case of high demand raised by the 5G terminal services, it is increasingly important to seek a method for determining a timing position that has high accuracy and less depends on the scenario.

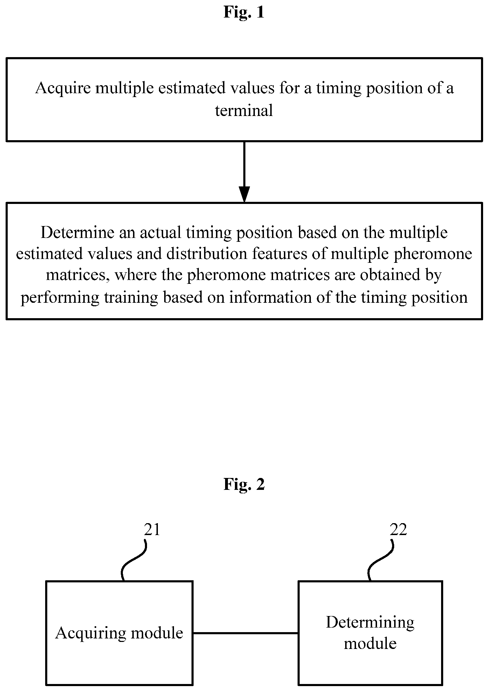

Fig. 1 is a flowchart of a method for determining a timing position provided by an embodiment of the present disclosure. The method may be applicable to determining a timing position in the case of high demand raised by the 5G terminal services. The method may be performed by an apparatus for determining a timing position provided by an embodiment of the present disclosure. The apparatus for determining a timing position may be implemented by software and/or hardware.

As shown in Fig. 1, the method for determining a timing position provided by the embodiments of the present disclosure mainly includes operations S11 and S12.

At S11, multiple estimated values for a timing position of a terminal are acquired.

At S12, an actual timing position is determined based on the multiple estimated values and distribution features of multiple pheromone matrices. The pheromone matrices are obtained by performing training based on information of the timing position.

In an exemplary embodiment, the operation that the actual timing position is determined based on the estimated values and the distribution features of the pheromone matrices may include the following operations.

The multiple pheromone matrices are updated based on the multiple estimated values.

A pheromone matrix with the most concentrated pheromone distribution among the updated pheromone matrices is determined as a target matrix.

A position corresponding to a maximum pheromone concentration in the target matrix is determined as the actual timing position.

In an exemplary embodiment, the operation that the estimated values for the timing position of the terminal are acquired may include the following operations.

A first estimated value for the timing position of the terminal is acquired by an earliest arriving path criterion.

A second estimated value for the timing position of the terminal is acquired by a maximum power path criterion.

A second estimated value for the timing position of the terminal is acquired by a time-domain gravity center criterion.

In an exemplary embodiment, the operation that the multiple pheromone matrices are updated based on the multiple estimated values may include the following operations.

A first estimated value is used to update a first pheromone matrix, wherein the first pheromone matrix is a matrix related to an earliest arriving path criterion.

A second estimated value is used to update a second pheromone matrix, wherein the second pheromone matrix is a matrix related to a maximum power path criterion.

A third estimated value is used to update a third pheromone matrix, wherein the third pheromone matrix is a matrix related to a time-domain gravity center.

In an exemplary embodiment, the operation that the pheromone matrices are updated based on the estimated values may include the following operations.

Pheromone is released at a rate of a pheromone release coefficient at a position of the n'-th row and the n-th column of the pheromone matrix, and the updated pheromone at the position is obtained.

In a case where the updated pheromone is greater than a maximum pheromone concentration in the pheromone matrix, the updated pheromone is replaced with the maximum pheromone concentration.

In an exemplary embodiment, the operation that the pheromone matrices are updated based on the estimated values may include the following operations.

Pheromones at all positions in the pheromone matrix are volatilized at a rate of a pheromone volatilization coefficient, and updated pheromones at all positions are obtained.

In a case where any of the updated pheromones is greater than a minimum pheromone concentration in the pheromone matrix, the updated pheromone is replaced with the minimum pheromone concentration.

In an exemplary embodiment, after the position corresponding to the maximum pheromone concentration in the target matrix is determined as the actual timing position, the method may include the following operation.

After the updated pheromone matrix is determined as a new pheromone matrix, an operation of updating the multiple pheromone matrices based on the multiple estimated values is executed.

In an application example, it is found according to the observations of entomologists that although ants in nature have underdeveloped vision, they can find the shortest path from a food source to the nest without any hints, and can adaptively search for the best new path after the environment changes, for example, when there are obstacles on the original path. This ability is supported by a behavior that ants can release, on a path they pass, a special secretion, namely pheromone, which can be detected by other ants within a certain range and affect their actions. As the pheromones increase on a path (diminish over time), subsequent ants are more likely to choose that path, thereby increasing the pheromone intensity of the path. Such a selection process is called auto-catalysis process of ants, and its principle is a positive feedback mechanism. An ant colony system is also called an enhanced learning system.

The basic idea of the ant colony system is imitating the social behavior that ants show by relying on the pheromones to communicate. Based on the definition of agent, each agent is guided by the auto-catalysis process that is guided by a greedy algorithm. It is a random general heuristic method that may be used to solve a variety of different portfolio optimization problems.

In the technical solution of the embodiments of the present disclosure, the pheromone of the ant colony system is introduced as the criterion of timing synchronization acquisition, so as to make full use of the characteristics of historical information to obtain the actual optimal timing position.

In the embodiment, a method for determining a pheromone matrix is first provided. The pheromone matrix is also called the pheromone matrix. The method for determining a pheromone matrix is described below.

Assuming that there may be N timing positions, through an estimation method, the timing position estimated by the current method is selected from the N possible ending bit positions. An N×N pheromone matrix **P** is defined, where **P**[n', n] represents the pheromone concentration during changing from the n'-th timing position to the n-th timing position. An estimation range depends on the estimation accuracy of the rough timing estimation, and further, a value range is the total number of discrete sampling points in [-CP/2, CP/2].

In order to state the process of updating the pheromone matrix, a pheromone release coefficient p_r, a pheromone volatilization coefficient p_v, the maximum pheromone concentration p_max and the minimum pheromone concentration p_min are defined.

After the timing position estimation at the current time is completed, the pheromone matrix is updated in the following way: pheromone is released at a rate of a pheromone release coefficient at the corresponding position in the pheromone matrix **P**, and the updated pheromone concentration at the position is made not greater than the maximum pheromone concentration. Pheromones at all positions in the pheromone matrix **P** are volatilized at a rate of a pheromone volatilization coefficient, and the concentration of all the pheromones after volatilization is made not less than the minimum pheromone concentration.

Further, the process of updating the pheromone matrix may be described as the following two steps.

At step 1, pheromone is released at the n'-th row and the n-th column of the matrix by using the following formula: **P**[*n*', *n*] = **P**[*n*',*n*] + *p*_*r*.

In a case where the updated **P**[*n*',*n*] is greater than the maximum pheromone concentration p_max, **P**[*n*',*n*] is made to be equal to the maximum pheromone concentration p_max. The timing position estimated at the previous moment is n', and the timing position estimated at the current moment is n.

At step 2, pheromone is volatilized at the position of each element in the matrix by using the following formula: **P**[*i,j*] = **P**[*i,j*] - *p*_*v*,
where both i and j can be any integers in the interval [0, N-1].

In a case where any updated **P**[*i*,*j*] is less than the minimum pheromone concentration p_min, **P**[*i*,*j*] is made to be equal to the minimum pheromone concentration p_min.

The characteristics of element distribution in the pheromone matrix reflect the prediction of the timing position and its reliability. Ideally, the pheromone concentration should be concentrated at one point on the diagonal. When the timing position has reliability problems like deviation, jitter or error, the optimal pheromone concentration will decrease and the distribution of pheromone concentration will spread, which blurs the pattern in the pheromone matrix. Therefore, the reliability of the timing position and the optimal timing position may be determined through the distribution features of the pheromone concentration in the pheromone matrix.

In an application example, the implementation of a method for accurately determining a timing position of a 5G terminal is further described in detail.

The method for accurately determining a timing position may include the following steps.

At step 1, three N×N ant colony pheromone matrices corresponding to the earliest arriving path, the maximum power path and the time-domain gravity center are defined respectively, namely a first pheromone matrix **P***_{f}*, a second pheromone matrix **P***ₘ* and a second pheromone matrix **P***_{c}*, where N is the total number of discrete sampling points within an estimated range. When a sampling rate is 15.36MHz, the value of N is 36.

At step 2, the current timing position of the 5G terminal is obtained through reference signals such as SSS, including the estimated values of the three positions, namely the earliest arriving path, the maximum power path and the time-domain gravity center.

Further, a first estimated value for the timing position of the terminal is acquired by an earliest arriving path criterion, a second estimated value for the timing position of the terminal is acquired by a maximum power path criterion, and a second estimated value for the timing position of the terminal is acquired by a time-domain gravity center criterion.

At step 3, pheromone is released on the corresponding first pheromone matrix **P***_{f}*, the second pheromone matrix **P***ₘ* and the second pheromone matrix **P***_{c}* by using the three estimated values acquired at step 2.

A releasing method is: assuming that the timing position estimated at the previous moment is n', the timing position estimated at the current moment is n, pheromone is released at a position of the n'-th row and the n-th column of the matrix by the following formula: **P**[*n*',*n*] = **P**[*n*'*n*] + *p*_ *r*, where the value of p_r is a value in the range from 0.05 to 0.2, for example, 0.1.

At step 4, the upper limit of the pheromone is applied. For the three pheromone matrices, in a case where any updated element **P**[*n*',*n*] is greater than the maximum pheromone concentration p_max, **P**[*n*',*n*] is made to be equal to the maximum pheromone concentration p_max, the typical value of p_max being 1.

At step 5, the pheromone is volatilized. For the three pheromone matrices, the pheromone is volatilized at the position of each element in the matrix by using **P**[*i,j*] = **P**[*i,j*] - *p*_*v*, where both i and j can be any integers in the interval [0, N-1], and the value of p_v is a value in the range from 0.01 to 0.05, for example, 0.02.

At step 6, the lower limit of the pheromone is applied. In the three matrices, in a case where any updated **P**[*i*,*j*] is less than the minimum pheromone concentration p_min, **P**[*i*,*j*] is made to be equal to the minimum pheromone concentration p_min, the typical value of p_min being 0.

At step 7, a pheromone matrix with the most concentrated pheromone distribution is selected from three pheromone matrices as a data source of adopting a timing strategy, that is, the pheromones with the greatest value are found respectively from the three matrices and compared, and then the matrix where the largest pheromone is located is selected as the data source of adopting a timing strategy. The position corresponding to the largest pheromone in the matrix is used as the actual timing position.

At step 8, return to step 2 to maintain and update the timing position of the next moment.

It is to be noted that the methods in the above exemplary embodiments may be realized by software. Because of the relatively large amount of computation in step 3 to step 6, step 3 to step 6 may also be realized by hardware, and other steps and parameter configuration may be realized by software. There is no limit in the embodiment.

The selection of parameters involved in the pheromone release coefficient and the pheromone volatilization coefficient mentioned in step 3 and step 5 are not unique, which may be optimized according to simulation results of a specific environment model.

There may be many different ways in selecting the optimal pheromone matrix in step 7. The step that "the pheromones with the greatest value are found respectively from the three matrices and compared, and then the matrix where the largest pheromone is located is selected as the data source of adopting a timing strategy" mentioned in the exemplary embodiment is only an implementation example in the method that "a pheromone matrix with the most concentrated pheromone distribution is selected as a data source of adopting a timing strategy".

By adaptively selecting the most suitable data source of timing strategy in the current channel environment according to the characteristics of the current and historical information, the technical solution provided by the embodiments of the present disclosure avoids the reliability problem in the specific channel environment caused by using only one of the earliest arriving path, the maximum power path or the time-domain gravity center, and makes full use of the historical data information estimated at the timing position to reduce the impact of single estimation deviation or error on the system performance.

By means of the technical solution provided by the embodiments of the present disclosure, the data source of the optimal timing position may be adaptively selected in different channel environments: when the power of the earliest arriving path is relatively low, the timing position determined by the earliest arriving path is prone to deviation, jitter and even error, the position at which the pheromone is released in the pheromone matrix **P***_{f}* of the earliest arriving path changes constantly, so it is difficult to release the pheromone continuously at some positions, and with the volatilization of the pheromone, the distribution features of the pheromone matrix are divergent, which reduces the probability of selecting the pheromone matrix of the earliest arriving path as the data source of adopting the timing strategy. Similarly, in a scenario with rich multiple paths and large noise power in the gravity center, the distribution features of each pheromone matrix are also divergent, which reduces the probability of selecting the corresponding pheromone matrix as the data source of adopting the timing strategy. Therefore, the present disclosure is conducive to adaptively selecting the data source of the optimal timing position in different channel environments.

Fig. 2 is a structural schematic diagram of an apparatus for determining a timing position provided by an embodiment of the present disclosure. The apparatus may be applicable to determining a timing position in the case of high demand raised by the 5G terminal services. The apparatus for determining a timing position may be realized by software and/or hardware.

As shown in Fig. 2, the apparatus for determining a timing position provided by the embodiments of the present disclosure mainly includes an acquiring module 21 and a determining module 22.

The acquiring module 21 is configured to acquire multiple estimated values for the timing position of the terminal.

The determining module 22 is configured to determine the actual timing position based on the multiple estimated values and distribution features of multiple pheromone matrices. The pheromone matrices are obtained by performing training based on information of the timing position.

In an exemplary embodiment, the determining module 22 is configured to update the multiple pheromone matrices based on the multiple estimated values, determine a pheromone matrix with the most concentrated pheromone distribution among the updated pheromone matrices as the target matrix, and determine the position corresponding to the maximum pheromone concentration in the target matrix as the actual timing position.

In an exemplary embodiment, the acquiring module 21 is configured to acquire, by an earliest arriving path criterion, a first estimated value for the timing position of the terminal, acquire, by a maximum power path criterion, a second estimated value for the timing position of the terminal, and acquire, by a time-domain gravity center criterion, a second estimated value for the timing position of the terminal.

In an exemplary embodiment, the determining module 22 is configured to use a first estimated value to update the first pheromone matrix, where the first pheromone matrix is a matrix related to an earliest arriving path criterion, use a second estimated value to update the second pheromone matrix, where the second pheromone matrix is a matrix related to a maximum power path criterion, and use a third estimated value to update the third pheromone matrix, where the third pheromone matrix is a matrix related to a time-domain gravity center.

In an exemplary embodiment, the determining module 22 is configured to: release pheromone at a rate of a pheromone release coefficient at a position of the n'-th row and the n-th column of the pheromone matrix, and obtain updated pheromone at the position; and in a case where the updated pheromone is greater than a maximum pheromone concentration in the pheromone matrix, replace the updated pheromone with the maximum pheromone concentration.

In an exemplary embodiment, the determining module 22 is configured to: volatilize pheromones at all positions in the pheromone matrix at a rate of a pheromone volatilization coefficient, and obtain updated pheromones at all positions; and in a case where any of the updated pheromones is greater than a minimum pheromone concentration in the pheromone matrix, replace the updated pheromone with the minimum pheromone concentration.

In an exemplary embodiment, the determining module 22 is configured to proceed to the operation of updating the multiple pheromone matrices based on the multiple estimated values after the updated pheromone matrix is determined as a new pheromone matrix.

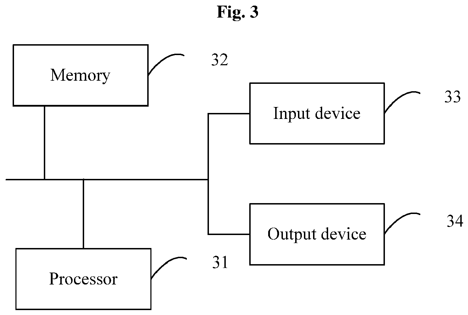

The embodiments of the present disclosure also provide a device. Fig. 3 is a structural schematic diagram of a device provided by an embodiment of the present disclosure. As shown in Fig. 3, the device provided by an embodiment of the present disclosure includes one or more processors 31 and a memory 32. There may be one or more processors 31 in the device, and one processor 31 is shown in Fig. 3 as an example. The memory 32 is configured to store one or more programs. When executed by the one or more processors 31, the one or more programs cause the one or more processors 31 to implement the methods in the embodiments of the present disclosure.

The device may also include: an input device 33 and an output device 34.

The processor 31, the memory 32, the input device 33, and the output device 34 in the device may be connected by a bus or in other ways. For example, in Fig. 3, the processor 31, the memory 32, the input device 33, and the output device 34 are connected by a bus.

The input device 33 may be configured to receive input number or character information and generate a key signal input related to the user settings and function control of the device. The output device 34 may include a display screen and other display devices.

As a computer-readable storage medium, the memory 32 may be configured to store software programs, computer executable programs and modules, such as the program instructions/modules corresponding to the method for determining a timing position described in the embodiments of the present disclosure (for example, the acquiring module 21 and the determining module 22 in the apparatus for determining a timing position). The memory 32 may include a program storage area and a data storage area. The program storage area may store an operating system and an application program required for at least one function. The data storage area may store data created based on the use of the device. In addition, the memory 32 may include a high-speed random access memory and may also include a non-volatile memory, for example, at least one disk storage device, a flash storage device, or other non-volatile solid state storage device. In some examples, the memory 32 may further include a memory arranged remotely relative to the processor 31 and the remote memory may be connected to the device through a network. An example of the network includes, but not limited to, the Internet, an Intranet, a local area network, a mobile communication network and a combination thereof.

The embodiments of the present application provide a storage medium, which may store a computer program. When executed by the processor, the computer program implements the method for determining a timing position in the embodiments of the present disclosure. The method may include the following operations.

Multiple estimated values for the timing position of the terminal are acquired.

The actual timing position is determined based on the multiple estimated values and distribution features of multiple pheromone matrices. The pheromone matrices are obtained by performing training based on information of the timing position.

Of course, a computer executable instruction included in the storage medium provided by the embodiments of the present disclosure is not limited to the above operations of the method described above, but may also perform the relevant operations in the method for determining a timing position provided by any embodiment of the present disclosure.

Through the above description of the embodiments, those having ordinary skill in the art can clearly know that the present disclosure may be realized by means of software plus necessary general-purpose hardware, certainly by means of hardware; but in many cases, the former is the better implementation. Based on this understanding, the technical solution of the present disclosure substantially or the part making a contribution to the related art can be embodied in the form of software product; the computer software product may be stored in a computer-readable storage medium, for example, a Read-Only Memory (ROM), a Random Access Memory (RAM), a flash memory, a hard disk or a compact disc, and includes a number of instructions to make a computer device (which can be a personal computer, a server or a network device, etc.) perform the method in each embodiment of the present disclosure.

It is to be noted that units and modules included in the embodiment of the apparatus for determining a timing position are only divided according to functional logic, but not limited to the above division, as long as the corresponding functions can be realized. In addition, the specific name of each functional unit is only intended to facilitate differentiation and not intended to limit the scope of protection of the present disclosure.

The above is only the exemplary embodiments of the disclosure and not intended to limit the protection scope of the disclosure.

Those having ordinary skill in the art should understand that the term user terminal covers any suitable type of wireless user device, such as a mobile phone, a portable data processing device, a portable Web browser, or a vehicle-mounted mobile station.

Generally speaking, multiple embodiments of the present disclosure may be implemented in hardware or dedicated circuits, software, logic or any combination thereof. For example, some aspects may be implemented in hardware, while other aspects may be implemented in firmware or software that may be executed by a controller, a microprocessor, or other computing devices, although the present disclosure is not limited to this.

The embodiments of the present disclosure may be implemented by executing computer program instructions by a data processor of a mobile device, for example, in a processor entity, or through hardware, or through a combination of software and hardware. The computer program instructions may be assembly instructions, Instruction Set Architecture (ISA) instructions, machine instructions, machine-related instructions, microcodes, firmware instructions, state setting data, or source codes or object codes written in any combination of one or more programming languages.

A block diagram of any logical flow in the accompanying drawings of the present disclosure may represent process operations, or interconnected logical circuits, modules and functions, or a combination of the process operations and the logical circuits, modules and functions. The computer program may be stored in the memory. The memory may have any type suitable for the local technical environment and may be implemented using any suitable data storage technology, such as but not limited to a Read-Only Memory (ROM), a Random Access Memory (RAM), an optical storage device and system (DVD or CD), etc. The computer-readable media may include non-transient storage media. The data processor may be any type suitable for the local technical environment, such as but not limited to a general-purpose computer, a special-purpose computer, a microprocessor, a Digital Signal Processor (DSP), an Application-Specific Integrated Circuit (ASIC), a Field Programmable Gate Array (FGPA), and a processor based on a multi-core processor architecture.

The exemplary embodiments of the present disclosure have been described in detail above through demonstrative and non-restrictive examples. However, with reference to the accompanying drawings and claims, various modifications and adjustments to the above embodiments are obvious to those having ordinary skill in the art, but do not depart from the scope of the present disclosure. Therefore, the proper scope of the present disclosure will be determined by the claims.

## Claims

1. A method for determining a timing position, comprising:
acquiring multiple estimated values for a timing position of a terminal; and
determining an actual timing position based on the multiple estimated values and distribution features of multiple pheromone matrices, wherein the pheromone matrices are obtained by performing training based on information of the timing position.

2. The method according to claim 1, wherein determining the actual timing position based on the estimated values and the distribution features of the pheromone matrices comprises:
updating the multiple pheromone matrices based on the multiple estimated values;
determining a pheromone matrix with the most concentrated pheromone distribution among the updated pheromone matrices as a target matrix; and
determining a position corresponding to a maximum pheromone concentration in the target matrix as the actual timing position.

3. The method according to claim 1, wherein acquiring the estimated values for the timing position of the terminal comprises:
acquiring, by an earliest arriving path criterion, a first estimated value for the timing position of the terminal;
acquiring, by a maximum power path criterion, a second estimated value for the timing position of the terminal; and
acquiring, by a time-domain gravity center criterion, a second estimated value for the timing position of the terminal.

4. The method according to claim 2, wherein updating the multiple pheromone matrices based on the multiple estimated values comprises:
using a first estimated value to update a first pheromone matrix, wherein the first pheromone matrix is a matrix related to an earliest arriving path criterion;
using a second estimated value to update a second pheromone matrix, wherein the second pheromone matrix is a matrix related to a maximum power path criterion; and
using a third estimated value to update a third pheromone matrix, wherein the third pheromone matrix is a matrix related to a time-domain gravity center.

5. The method according to claim 4, wherein updating the pheromone matrices based on the estimated values comprises:
releasing pheromone at a rate of a pheromone release coefficient at a position of the n'-th row and the n-th column of the pheromone matrix, and obtaining updated pheromone at the position; and
in a case where the updated pheromone is greater than a maximum pheromone concentration in the pheromone matrix, replacing the updated pheromone with the maximum pheromone concentration.

6. The method according to claim 4, wherein updating the pheromone matrices based on the estimated values comprises:
volatilizing pheromones at all positions in the pheromone matrix at a rate of a pheromone volatilization coefficient, and obtaining updated pheromones at all positions;
in a case where any of the updated pheromones is greater than a minimum pheromone concentration in the pheromone matrix, replacing the updated pheromone with the minimum pheromone concentration.

7. The method according to claim 2, wherein after determining the position corresponding to the maximum pheromone concentration in the target matrix as the actual timing position, further comprising:
after determining the updated pheromone matrix as a new pheromone matrix, proceeding to an operation of updating the multiple pheromone matrices based on the multiple estimated values.

8. An apparatus for determining a timing position, comprising:
an acquiring module, configured to acquire multiple estimated values for a timing position of a terminal; and
a determining module, configured to determine an actual timing position based on the multiple estimated values and distribution features of multiple pheromone matrices, wherein the pheromone matrices are obtained by performing training based on information of the timing position.

9. A device, comprising:
one or more processors; and
a memory, configured to store one or more programs;
when executed by the one or more processors, the one or more programs cause the one or more processors to implement the method according to any one of claims 1 to 7.

10. A storage medium, storing a computer program, wherein when executed by a processor, the computer program implements the method according to any one of claims 1 to 7.
